# EUROPÄISCHE PATENTSCHRIFT

(11) **EP 1 933 757 B1**
(45) Veröffentlichungstag und Bekanntmachung des Hinweises auf die Patenterteilung: **29.03.2017**
(21) Anmeldenummer: 06791673.4
(22) Anmeldetag: 25.08.2006
(51) Int. Cl.: A61C 8/00, A61C 1/08

(54) **ROHLING ALS BOHRSCHABLONE UND ZUM REGISTRIEREN VON DATENSÄTZEN**
BLANK USED AS A BORING JIG AND FOR DATA RECORDING
ÉBAUCHE UTILISÉE COMME GABARIT DE PERCAGE ET POUR ENREGISTRER DES ENREGISTREMENTS DE DONNÉES

(30) Priorität: 26.08.2005 DE 102005040738; 26.08.2005 DE 102005040739
(43) Veröffentlichungstag der Anmeldung: 25.06.2008
(73) Patentinhaber: siCAT GmbH & Co. KG, 53177 Bonn (DE)
(72) Erfinder: ZÜNDORF, Gerhard, 53121 Bonn (DE); KEEVE, Erwin, 53115 Bonn (DE); RITTER, Lutz, 53332 Bornheim (DE)
(74) Vertreter: Braun-Dullaeus, Karl-Ulrich
(86) Internationale Anmeldenummer: PCT/EP2006/008364
(87) Internationale Veröffentlichungsnummer: WO 2007/022995

(56) Entgegenhaltungen:
- WO-A-2005/023138
- WO-A2-03/060825
- DE-A1- 19 952 962

## Beschreibung

Die vorliegende Erfindung betrifft eine Verwendung eines Schablonenrohlings für eine Behandlungsschablone zur Definition eines gemeinsamen Bezugsystems zwischen einerseits einem Satz von Bilddaten, die den Kiefer eines Patienten repräsentieren und die mit einem bildgebenden Verfahren, wie CT, NMR oder Cone Beam, aufgenommen sind. Die Behandlungsschablone kann während eines operativen Eingriffes auf den Zähnen des Patienten in definierter Position lösbar fixiert sein und weist eine zur Führung eines Instrumentes dienende Struktur auf, wobei an der Behandlungsschablone Marker vorgesehen sind, die sich mittels des bildgebenden Verfahrens darstellen lassen und die ein Bezugsystem aufspannen.

Aus der kieferchirurgischen Implantologie ist es bekannt, Zahnimplantate in einen vorgebohrten Kanal einzusetzen, der vermittels einer Bohrschablone in den Kiefer des Patienten eingebracht wurde. Dabei erfolgt die Anfertigung der Bohrschablone anhand eines Modells des Gebisses, insbesondere an einem Gipsabdruck. Wie auf den Gipsabdruck, so kann die Bohrschablone bei der späteren Operation an derselben Position auf die Zähne des Patienten aufgesetzt werden. Mit einer solchen Bohrschablone wird die Gefahr der versehentlichen Verletzung kritischer anatomischer Strukturen gemindert, die beim Freihandbohren besteht. Der Aufwand für das Anfertigen der Schablone ist allerdings beachtlich. So vergehen zwischen der ersten Sitzung, bei der eine Röntgenaufnahme und ein Abdruck erstellt wird, und der Insertion der Implantate meist mehrere Tage. Der Grund dafür liegt darin, dass der behandelnde Zahnarztes mit dem zahntechnischen Labor zusammenarbeiten muss, das die Bohrschablone auf Basis des Gipsmodells herstellt.

Aus der WO 2005/023138 A1 ist es bekannt, sich bei der Anfertigung solcher Bohrschablonen tomographischer Volumendatensätze zu bedienen. Dabei wird im Rahmen der Planung der Bohrkanal in seiner Tiefe, seinem Durchmesser und seiner Ausrichtung an dem Computermodell simuliert und mit diesen Parametern auf die später an definierter Stelle auf den Zähnen aufsitzende Bohrschablone übertragen. Um die korrekte Übertragung auf die Bohrschablone zu ermöglichen, muss die Position der Bohrschablone im Volumendatensatz, im physikalischen Modell und auch bezüglich des Kiefers des Patienten exakt übereinstimmen. Die Definition eines gemeinsamen Bezugssystems wird mittels einer "Registrierung" bewerkstelligt, wozu die WO 2005/023138 A1 ein Plättchen vorschlägt, das als Marker für die am Zahnmodell hergestellte Schablone dient.

Nach diesem Stand der Technik wird die Schablone auf Basis des Gipsmodells mittels eines Tiefziehverfahrens erstellt, wobei eine erhitzte Folie per Überdruck an das Gipsmodell angepasst wird. Die Folie wird nach Abkühlung starr und kann als Schablone Verwendung finden. Alle bekannten Verfahren zur Herstellung einer Bohrschablone bedienen sich des Zwischenschrittes über das Gipsmodell.

Aufgabe der Erfindung ist es daher, eine besonders vorteilhafte Verwendung des Schablonenrohlings vorzuschlagen.

### Diese Aufgabe wird durch die Verwendung nach

Anspruch 1 gelöst. Vorteilhafte Ausführungsformen der Erfindung sind in den jeweiligen Unteransprüchen genannt.

Ein erster wesentlicher Grundgedanke der Erfindung liegt zunächst darin, ein zur Registrierung einzusetzendes Mittel direkt als Schablonenrohling zu verwenden, aus dem in einem der Aufnahme der Patientendaten unmittelbar nachfolgenden Verfahrensschritt die Behandlungsschablone gefertigt wird. Erfindungsgemäß wird dem Patienten an der zu behandelnden Stelle ein solcher mit Markern versehener Schablonenrohling vermittels einer aushärtenden Abdruckmasse auf einen Zahn und/oder den Kiefer aufgesetzt, bevor der Satz von Bilddaten vom Kiefer mit dem eingesetzten Schablonenrohling in einem Scan, insbesondere mittels CT, NMR oder Cone Beam, aufgenommen wird. Die am Schablonenrohling befindlichen Marker definieren ein Bezugssystem, das die Registrierung ermöglicht.

Als Marker kommen generell alle definierten "markanten" Strukturen des Schablonenrohlings, wie Ecken und/oder Kanten in Betracht. Um eine genauere Lokalisierung zu erhalten ist es jedoch vorteilhaft, den Schablonenrohling mit besonders offensichtlichen und/oder besonders gut darstellbaren Strukturen auszustatten, die dann als Marker Verwendung finden.

Nach dem Scan wird der Schablonenrohling zusammen mit der erhärteten Abdruckmasse entfernt und nachfolgend in eine Bearbeitungsvorrichtung eingespannt, wobei die Abdruckmasse keine Beschädigung erfahren sollte. In der Zwischenzeit kann die Planung der Behandlung an den Patientendaten in dem durch die Marker des Schablonenrohlings aufgespannten Bezugsystem erfolgen. Insbesondere wird im Rahmen der Planung die Lage, die Dimension und die Ausrichtung des durch den Schablonenrohling hindurchreichenden Bohrloches festgelegt. In der Bearbeitungsvorrichtung ist der Schablonenrohling in definierter Position eingespannt, so dass die zur Führung der Instrumente nötige Struktur, insbesondere die Bohrung, mit einem spanabhebenden Werkzeug aus dem Schablonenrohling ausgehoben werden kann. Dazu werden die Werkzeuge entsprechend der an den Bilddaten vorgenommenen Planung computergesteuert im System mit registriertem Bezugssystem bewegt. Damit ist eine Behandlungsschablone geschaffen, die sich an der richtigen Position auf die Zähne des Patienten aufsetzen lässt.

Vorteilhafterweise ist der Schablonenrohling als stabiles Plättchen derart gestaltet, dass es mehrere Zähne einschließlich der mit Implantat zu füllenden Zahnlücke überdeckt. Das erfindungsgemäße Plättchen wird vom Zahnarzt vor dem Scan mit dem Abdruckmaterial beschickt und dem Patienten derart auf die zu versorgende Zahnlücke gesetzt, dass ihm die benachbarten Zähne ausreichenden Halt geben. Das Plättchen mit dem erhärteten Abdruckmaterial kann entnommen und jederzeit wieder exakt repositioniert werden. Nach dem Scan und der Bearbeitung dient der Schablonenrohling inklusive dem Abdruckmaterial als Behandlungs- insbesondere als Bohrschablone. Vorteilhafterweise wird dabei für das Verfahren eine geeignete Abdruckmasse verwendet, die nach der Erhärtung problemlos bearbeitbar ist und nicht zur Brüchigkeit neigt.

Ein wesentlicher Gesichtspunkt der Erfindung ist es somit, einen stabilen Schablonenrohling als Träger zu verwenden, der mit einer Abdruckmasse so fest verbunden wird, dass das Gebilde aus Schablonenrohling und Abdruckmasse problemlos einer spanabhebenden Bearbeitung, insbesondere einem Bohren und/oder Fräsen, zugeführt werden kann. Dazu muss der Schablonenrohling im Bereich der Zahnlücke eine ausreichende Dicke aufweisen, um der Bohrung selber und/oder einer darin eingesetzten Bohrhülse genügend Stabilität geben zu können. Die Abdruckmasse dient demnach im wesentlichen der Positionierung auf dem Kiefer, während die Positionierung und Stabilisierung der Bohrung oder der Bohrhülse durch den Schablonenrohling geschieht. Die Planung der in den Kiefer einzubringenden Bohrkanäle wird vorteilhafterweise auf der Basis bildgestützter Planungsprogramme durchgeführt.

Um einen ausreichend guten Halt der Abdruckmasse am Schablonenrohling zu gewährleisten, ist es vorteilhaft, an dessen Unterseite Strukturen vorzusehen, die sich in die Abdruckmasse eingraben. Diese Strukturen können beispielsweise von Rippen gebildet werden, die sich über die Unterseite verteilen. Weiterhin ist es vorteilhaft, wenn am Schablonenrohling ein Bohrbereich mit erhöhter Stärke vorgesehen ist, der ein tiefe Bohrung und damit eine gute Führung ermöglicht. Der verstärkte Bohrbereich kann gewissermaßen als Fortsatz in Richtung Zahnfleisch ausgebildet werden, der bei der Abdrucknahme parallel zu den umgebenden Zahnachsen ausgerichtet ist. Ein solcher Fortsatz ist im radiologischen Bild sichtbar und erleichtert zudem die Planung.

Anstelle des verstärkten Bohrbereiches oder auch zusammen mit dem verstärkten Bohrbereich kann es vorteilhaft sein, in die Bohrung eine Bohrhülse aus einem vorzugsweise biokompatiblen Metall, beispielsweise aus Titan, einzusetzen, um den Abrieb während des späteren Bohrens zu minimieren. Um Artefakte während des Scans zu vermeiden, ist es vorteilhaft, wenn der Schablonenrohling aus einem robusten Kunststoff besteht. Weiterhin ist es vorteilhaft, den Schablonenrohling der Anatomie des jeweiligen Kieferbereichs beispielsweise durch eine Krümmung anzupassen. Für Zahnlücken in verschiedenen Kieferregionen, insbesondere für Schneidezähne und Backenzähne, können der Anatomie angepasste Schablonenrohlinge vorgesehen sein.

Der Vorteil dieser Erfindung liegt darin, dass es dem Zahnarzt nun möglich ist, eine Bohrschablone auf einfache Weise in seiner Praxis selber herzustellen. Die Herstellung eines Gipsmodells ist dazu nicht länger notwendig. Eine Insertion der Implantate kann somit schon kurze Zeit nach der Planung der Bohrungen erfolgen. Die Herstellung der Bohrschablone geschieht damit gewissermaßen "live" und ohne Modell. Mit der Erfindung wird es dem Zahnarzt möglich, Einzelzahn- oder Schaltlücken sicher und mit reduziertem Aufwand mittels der erfindungsgemäßen Bohrschablone implantologisch zu versorgen. Zudem ist es von Vorteil, dass die Anschaffung einer dedizierten Bohr- und Fräsvorrichtung entfällt, da aufgrund des in der Regel kleinen Arbeitsbereichs bereits vorhandene Vorrichtungen verwendet werden können. Als Beispiel dafür sei das Cerec-System der Firma Sirona Dental Systems GmbH genannt, das für die CAD/CAM gestützte Herstellung von Kronen konzipiert ist.

Mit der Erfindung wird die sichere Einbringung von Bohrlöchern in den Kiefer und damit eine gute Versorgung der Patienten mit Zahnimplantaten gewährleistet. Die Bohrlöcher dienen dabei als Aufnahmebett für die Implantate, die wiederum die künstlichen Zähne tragen. Da gerade bei älteren Patienten das Knochenangebot der Kieferkämme vermindert ist, ist die Wahrscheinlichkeit für das Auftreten von Komplikationen, wie der Penetration des Nervkanals oder der Nasennebenhöhlen mit dem Bohrer, erhöht. Daher ist die auf radiologischen Bildern basierende Planung der Operation und die Nutzung der Bohrschablonen von entscheidendem Vorteil. So kann sichergestellt werden, dass die geplanten Bohrlöcher exakt in den Kiefer übertragen werden.

Eine weiterer unabhängiger Aspekt der Erfindung liegt in der nachfolgend aufzuzeigenden vorteilhaften Verwendung des Schablonenrohlings zu Zwecken der Registrierung. Eine Registrierung im Sinne einer genauen Überlagerung zur Definition eines gemeinsamen Bezugssystems ist immer dann notwendig, wenn verschiedene, dasselbe Objekt repräsentierende Sätze von mehrdimensionalen Bilddaten miteinander verglichen werden sollen. In diesem Fall kann mit dem Schablonenrohling eine Registrierung zwischen dreidimensionalen Bilddaten vom Kiefer des Patienten einerseits und einem Modell des Kiefers andererseits vorgenommen werden. Eine solche Registrierung ist notwendig, um die an dem Modell geplanten Behandlungsschritte in Bezug zur Realität zu setzen.

Um das zu gewährleisten wird an dem Schablonenrohling eine erste Art von Markern vorgesehen, die ein Bezugsystem aufspannen und die sich mit dem durchleuchtenden bildgebenden Verfahren darstellen lassen. Zudem ist wird eine zweite Art von Markern vorgesehen, die von optisch sichtbaren Strukturen gebildet werden und die ebenfalls ein Bezugsystem aufspannen. Beide Bezugsysteme stehen in fester Beziehung zueinander und sind im einfachsten Fall gleich.

Der Grundgedanke dieses Teils der Erfindung somit liegt darin, dass der handhabbare Schablonenrohling einerseits die Marker aufweist, die mit dem durchleuchtenden Verfahren darstellbar sind, und dass andererseits Marker vorhanden sind, die sich mit einem rein optischen Verfahren, beispielsweise mit einem Laserscanner, in einem Oberflächendatensatz eines Modells des Objektes darstellen lassen. Mit diesen Markern unterschiedlicher Charakteristika lassen sich die beiden Datensätze exakt übereinander legen, wobei es zum einen aus fertigungstechnischen Gründen aber vor allem auch wegen der Einsparung von Rechenoperationen vorteilhaft ist, wenn die unterschiedlichen Charakteristika jeweils in derselben Markerstruktur vereinigt sind. Erfindungsgemäß wird somit zur Lösung des Registrierungsproblems ein Schablonenrohling verwendet, dessen Lage im Raum wegen der angebrachten und/oder inkorporierten Marker computergestützt ermittelt werden kann. Dabei kommen als optisch sichtbare Marker generell alle definierten "markanten" Strukturen des Schablonenrohlings, wie Ecken oder Kanten in Betracht. Es ist jedoch vorteilhaft, besonders offensichtliche Strukturen vorzusehen, die als Marker dienen.

Mit einer solchen Verwendung eines derart ausgestatteten Schablonenrohlings ist eine handhabbare Vorrichtung zur Registrierung dieser Datensätze geschaffen, die sich einfach und kostengünstig herstellen lässt und die bei einfacher und praxistauglicher Handhabung eine genaue Registrierung von dreidimensionalen Bilddaten eines Objektes, insbesondere von Bilddaten des Kieferbereiches eines Patienten, im Verhältnis zu Daten eines entsprechenden Modells zulässt.

Die Vorteile der erfindungsgemäßen Verwendung des Schablonenrohlings liegen in dem besonders einfachen mechanischen Aufbau und in der einfachen Handhabung. Die bevorzugten Einsatzgebiete sind die Kieferchirurgie, die Kieferorthopädie und die entsprechende Prothetik respektive die Implantologie. Da der Schablonenrohlings als Vorrichtung verhältnismäßig klein ist, wird sein Einsatz vom Patienten nicht als sonderlich unbequem empfunden. Besonders vorteilhaft ist, dass die Vorrichtung in einer besonders einfachen Ausführungsform nur an der Oberfläche einer Zahnreihe anliegt und nicht zwischen die Zähne geklemmt werden braucht. Der Schablonenrohling kann von jedem behandelnden Arzt ohne viel Übung eingesetzt werden. Dabei sind keine besonderen Anweisungen zu beachten.

Die mit dem Schablonenrohling durchführbare Art der Registrierung bietet eine Reihe von Vorteilen: So können zum einen die von Metallen hervorgerufenen Artefakte in den Volumendatensätzen minimiert werden. Das geschieht dadurch, dass die vom Modell aufgenommenen Oberflächendaten in dem Sinne mit den Volumendaten rechnerisch kombiniert werden, dass lediglich die unter der Oberfläche liegenden Volumenelemente dargestellt werden. So werden alle außerhalb des Kiefers liegenden Daten, in denen sich die Artefakte besonders bemerkbar machen, aus der Darstellung "herausgerechnet" und damit die die Aufnahme verfälschenden Metallartefakte minimiert. Durch die Überlagerung des Datensatzes mit der artefaktfreien Aufnahme des entsprechenden Modells können die äußeren Konturen des Patientendatensatzes bei gleichzeitiger Darstellung der relevanten Volumeninformation korrekt wiedergegeben werden.

Bei der Erzeugung eines Oberflächendatensatzes kann es sein, dass die Abbildung des Schablonenrohlings interessante Strukturen verdeckt. Um das zu umgehen ist es vorteilhaft, zwei optische Scans durchzuführen, nämlich einen ersten mit der Vorrichtung um die Lage des Modells im Bild zu bestimmen und einen zweiten ohne den Schablonenrohling, bei dem das Modell sich relativ zur Aufnahmevorrichtung nicht bewegt hat. Letztere Aufnahme wird dann mit dem Patientenscan überlagert.

Wegen des einfachen Aufbaus ist es besonders vorteilhaft, wenn zumindest die optisch darstellbaren Marker als sichtbare Teile einer insbesondere als kleines Basisplättchen ausgebildeten und der Vorrichtung zugehörigen Grundstruktur ausgebildet sind. Diese Grundstruktur ist vorteilhafterweise so zu bemessen, dass sie sich den Dimensionen eines Zahnes oder einer Reihe weniger Zähne anpasst. So kann die Grundstruktur ein Basisplättchen sein, von dessen einer Oberfläche sich zumindest drei Marker von außen sichtbar erheben. Das Basisplättchen selber ist vorteilhafterweise aus einem Material geringerer Dichte, insbesondere aus Kunststoff, gefertigt, das Röntgenstrahlen verhältnismäßig wenig absorbiert. Das Basisplättchen ist für Röntgenstrahlen vorteilhafterweise nahezu unsichtbar. Hingegen sollen die Marker die Röntgenstrahlen absorbieren, damit sie in den Bilddaten exakt identifizierbar sind. Dazu beinhalten sie ein Material höherer Dichte, insbesondere eine Keramik oder ein Metall relativ geringer Dichte, die keine der oben angesprochenen Artefakte ausbildet.

Nachfolgend wird die Erfindung anhand der Figuren 1 bis 4 näher erklärt. Es zeigen:
- **Figur 1**: einzelne Verfahrensschritte a) - d) mit Schablonenrohling,
- **Figur 2**: eine Bohrschablone mit Bohrhülse und Bohrbereich,
- **Figur 3**: einen Schablonenrohling zur Registrierung und
- **Figur 4**: einen auf eine Zahnreihe aufgesetzten Schablonenrohling.

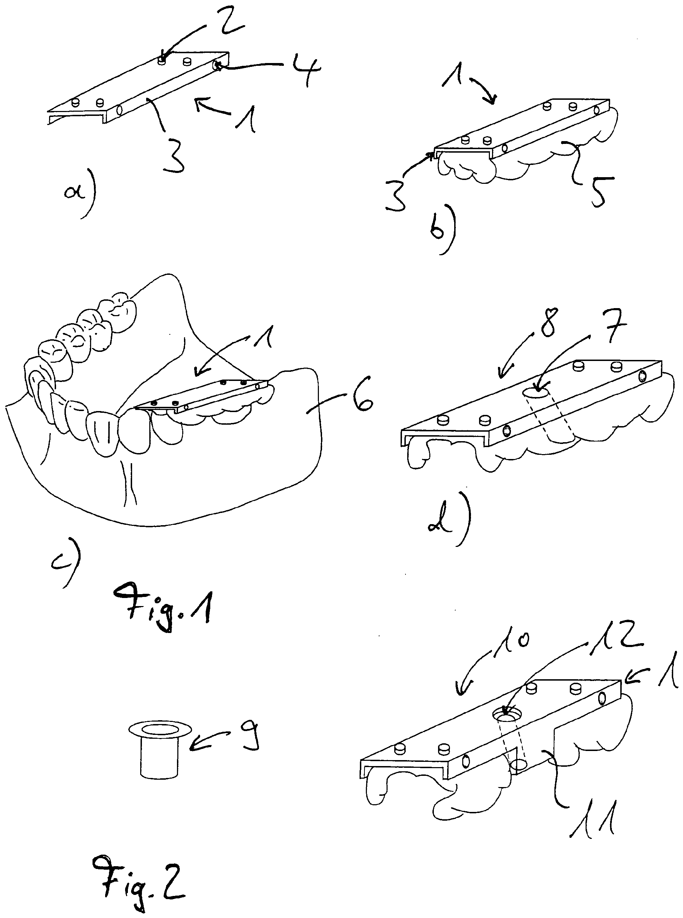

In Figur 1 a) ist ein als Basisplättchen ausgebildeter Schablohnenrohling 1 aus einem robusten Kunststoff gezeigt. Dieser weist Marker 2 auf, die als kleine erhabene Strukturen in Form von Zylindern auf die Oberseite des Basisplättchens aufgebracht sind. Die Marker 2 sind als kleine Metallstrukturen so konzipiert, dass sie sich im Volumen- und im Oberflächenscan gut darstellen lassen und ein Bezugsystem aufspannen. An der Unterseite des Schablonenrohlings 1 sind Rippen 3 vorgesehen, die für den besseren Halt der Abdruckmasse 5 sorgen. Die Unterseite bildet somit eine Aufnahme für die Abdruckmasse 5. In den Rippen 3 sind Bohrungen 4 vorgesehen, über die der Schablonenrohling 1 in definierter Position in eine weiterbearbeitende Vorrichtung eingespannt werden kann.

Figur 1 b) zeigt den nachfolgenden Verfahrensschritt, in dem die mit den Rippen 3 versehene Unterseite des Schablonenrohlings 1 mit noch weicher Abdruckmasse 5 beschickt ist. In diesem Zustand wird der Schablonenrohling 1 auf die mit dem Implantat zu versorgende Stelle im Kiefer 6 über einer Zahnlücke aufgesetzt (Figur 1 c). Sobald die Abdruckmasse 5 ausgehärtet ist, wird ein Scan vom Patienten erstellt. In den Bilddaten wird die Position des Schablonenrohlings 1 im Verhältnis zur Anatomie des Kiefers genau bestimmt.

Nach dem Scan wird der Schablonenrohling 1 abgenommenen, bevor eine Bohrung 7 eingebracht wird, deren Durchmesser und Winkel anhand der Bilddaten geplant und über eine spanabhebende Verarbeitungsvorrichtung eingebracht ist (Figur 1d). Die Tiefe, in die der Bohrer bei der Operation eindringt, kann durch einen Anschlag bestimmt werden. Aus dem Schablonenrohling 1 ist nunmehr eine einsatzfähige Schablone 8 entstanden, die wegen der erhärteten Abdruckmasse 5 an die alte Position im Kiefer 6 aufgesetzt werden kann. In die Bohrung 7 kann eine Bohrhülse 9 eingebracht werden.

In Figur 2 ist eine alternative Ausführungsform einer Schablone 10 gezeigt, bei welcher der Schablonenrohling 1 im Bereich der Zahnlücke eine Verstärkung 11 als Bohrbereich aufweist. In dieser Ausführungsform verhindert ein Anschlag 12 ein zu tiefes Eindringen der Bohrhülse 9 und stabilisiert deren Halt.

Nachfolgend sind die Verfahrensschritte noch einmal zusammengefasst: Zunächst wird der Schablonenrohling vom Zahnarzt mit einem Abdruckmaterial beschickt und dem Patienten so auf die zu versorgende Zahnlücke gesetzt. Dabei ist darauf zu achten, dass die benachbarten Zähne einen ausreichenden Halt geben. Nach kurzer Verweildauer ist das Abdruckmaterial erhärtet. Der Schablonenrohling, der mit dem Abdruckmaterial fest verbunden ist, kann nun entnommen und wieder exakt repositioniert werden. Während der Patient den Schablonenrohling auf den Zähnen trägt, wird eine Aufnahme, vorzugsweise eine 3D-Röntgenaufnahmen, des Kieferbereichs angefertigt. Wie gewohnt führt der Zahnarzt die Planung der Bohrlöcher am Computer durch wobei Orientierung und Position des oder der zu ersetzenden Zähne durch Computersimulation bestimmt werden kann. Da die Lage des Schablonenrohlings relativ zum Kiefer automatisch erkannt werden kann, ist auch die Lage der Bohrlöcher relativ zum Schablonenrohling bekannt. Dieser kann über die definierte Schnittstelle in eine Bohr - Fräsmaschine eingespannt werden. Die Daten, die von der Bohr- Fräsvorrichtung zum exakten Einbringen der Löcher benötigt werden, werden von der Planungssoftware geliefert. In die Bohrung wird eine Bohrhülse eingebracht, die ihren primären Halt sowohl in dem Schablonenrohling als auch in der Abdruckmasse finden kann. An der Stelle des fehlenden Zahns kann der Schablonenrohling eine Verstärkung aufweisen, um den Halt der Bohrhülse dort zu verstärken. Die Position der Hülse im Schablonenrohling kann durch einen Anschlag reguliert werden.

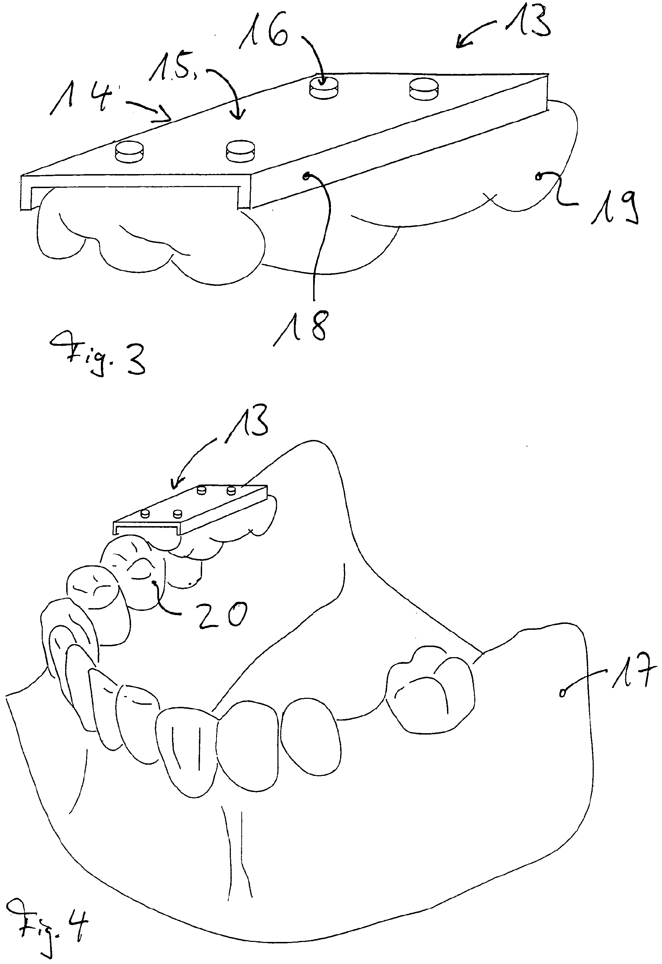

Figur 3 zeigt einen Schablonenrohling 13 zur Registrierung zweier Bilddatensätze eines Kiefers. Der Schablonenrohling 13 hat als Grundstruktur ein Basisplättchen 14 aus Kunststoff, von dessen einer Oberfläche 15 sich vier Marker 16 erheben. Diese als kleine Zylinder ausgebildeten Marker 16 stellen definierte Strukturen dar, die sich, da sie offensichtlich sichtbar sind, mit optischen Verfahren darstellen lassen. In ihrer Anordnung spannen die Marker 16 ein Bezugsystem in drei Dimensionen auf. Sie lassen sich zudem mittels eines durchleuchtenden bildgebenden Verfahrens, das insbesondere Röntgenstrahlung nutzt, darstellen und spannen dabei dasselbe Bezugsystem auf. Um für die Röntgenstrahlung sichtbar zu sein, bestehen die Marker 16 aus einer Keramik. In diesem Fall bilden die optisch darstellbaren Marker und die für die Röntgenstrahlung sichtbaren Marker dieselben Markerstrukturen, nämlich kleine Zylinder 16 auf der Oberfläche des Basisplättchens 14.

Um eine Möglichkeit zu schaffen, den Schablonenrohling 13 am Unterkiefer 17 (Figur 4), an definierter Position auf den Zähnen zu befestigen, weist das Basisplättchen 14 an seiner Unterseite zwei Rippen 18 auf, die sich in die zunächst weiche Abdruckmasse 19 eingraben. Somit ist an der anderen Oberfläche des Basisplättchens eine Aufnahme für die Abdruckmasse 19 ausbildet. Vermittels der ausgehärteten Abdruckmasse 19 ist die Vorrichtung an reproduzierbarer Position sowohl am Kiefer des Patienten sowie am Gipsmodell des Kiefers aufsetzbar.

In der Praxis wird das Verfahren folgendermaßen umgesetzt: Im Vorfeld des Patientenscans wird der Schablonenrohling 13 mit der schnell aushärtenden Abdruckmasse 19 beschickt und dem Patienten auf die Zähne 20 aufgesetzt. Dabei ist es ausreichend, einen oder nur wenige Zähne zu überdecken, um einen festen Halt und eine reproduzierbare Lage gewährleisten zu können. Der Schablonenrohling 13 wird damit zur Registierschablone. Dabei wird die Vorrichtung vorzugsweise in einem Bereich aufgesetzt, der für die medizinische Fragestellung nicht von primärem Interesse ist. Nun folgt der Scan des Patienten mit aufgesetzter Registrierschablone.

Für die Registrierung des Patientendatensatzes mit dem physikalischen Modell z.B. in einer Bohr-Fräsvorrichtung wird die Registrierschablone auf das fest in der Bohr-Fräsvorrichtung installierte Modell angebracht. Mittels eines mechanischen und/oder optisch Koordinatenmessgerätes wird die Lage der Registrierschablone registriert. Die Bearbeitungsschritte können nun relativ zu dieser Lage durchgeführt werden. Zur Steigerung der Genauigkeit des Registrierung können auch mehrere Registrierschablonen Verwendung finden. Für die Überlagerung von Ober und Unterkiefer muss jeweils mindestens ein Plättchen eingesetzt werden.

Das Verfahren zur Registrierung eines einen Kieferbereich eines Patienten, repräsentierenden Volumendatensatzes mit dem erfindungsgemäßen Schablonenrohling kann somit nach folgenden Schritten ablaufen: Zunächst wird der Schablonenrohling vermittels einer schnell aushärtenden Abdruckmasse auf zumindest einen Zahn des Patienten in reproduzierbarer Lage aufgesetzt, dann wird mittels des durchleuchtenden bildgebenden Verfahrens ein erster Bilddatensatz aufgenommen, bevor der Schablonenrohling vom Patienten abgenommen und an entsprechender Stelle auf ein Modell des Kieferbereiches des Patienten aufgesetzt. Danach wird mit einem optischen bildgebenden Verfahren ein zweiter Bilddatensatz von der Oberfläche des Modells aufgenommen, bevor beide Bilddatensätze vermittels der Positionen der jeweils darin darstellbaren Marker überlagert ("registriert") werden.

## Patentansprüche

1. Verwendung eines Schablonenrohlings für eine Behandlungsschablone zur Definition eines gemeinsamen Bezugsystems in zwei Sätzen von Bilddaten, die den Kiefer (5,17) eines Patienten repräsentieren, wobei der Schablonenrohling (1,13) vermittels einer schnell aushärtenden Abdruckmasse (5,19) an zumindest einem Zahn des Patienten in definierter Position lösbar befestigt und mittels eines durchleuchtenden bildgebenden Verfahrens ein erster Bilddatensatz aufgenommen wird, wobei am Schablonenrohling (1,13) befindliche Marker (4) ein Bezugsystem aufspannen und mittels des bildgebenden Verfahrens dargestellt werden,
wobei der Schablonenrohling (2) eine erste Art von Markern (16), die sich mittels des durchleuchtenden bildgebenden Verfahrens darstellen lassen und die ein Bezugsystem aufspannen, und eine zweite Art von Markern (16), die von definierten sichtbaren Strukturen gebildet sind und die ebenfalls ein Bezugsystem aufspannen, aufweist,
**dadurch gekennzeichnet,**
**dass** mit einem optischen bildgebenden Verfahren, insbesondere mittels eines Laserscanners, ein zweiter Satz von Bilddaten von der Oberfläche eines Modells des Kiefers aufgenommen wird, wobei auf das Modell der mit erhärteter Abdruckmasse versehene Schablonenrohling aufgesetzt ist und wobei beide Bilddatensätze vermittels der Positionen der jeweils darin darstellbaren Marker (4,16) überlagert werden.

2. Verwendung nach Anspruch 1,
**dadurch gekennzeichnet, dass**
der Schablonenrohling eine für die Beschickung mit Abdruckmasse (19) geeignete Aufnahme aufweist, an die ein den Schablonenrohling (13) bildendes stabiles, insbesondere aus Kunststoff gefertigtes, Basisplättchen (14) angeformt ist, dessen Stärke die Einbringung der als Führung dienenden Bohrung erlaubt.

3. Verwendung nach Anspruch 2,
**dadurch gekennzeichnet,**
**dass** sich zumindest drei Marker (16) als definierte Strukturen von dem Basisplättchen (14) erheben.

4. Verwendung nach einem der Ansprüche 1 bis 3,
**dadurch gekennzeichnet, dass**
der Schablonenrohling Mittel aufweist, die ein definiertes Einspannen in eine weiterbearbeitende Vorrichtung erlauben.

5. Verwendung nach einem der Ansprüche 2 oder 3,
**dadurch gekennzeichnet,**
**dass** das Basisplättchen (14) einen Bohrbereich (11) mit erhöhter Stärke aufweist, der ein tiefe Bohrung (7) und damit eine gute Führung ermöglicht.

6. Verwendung nach einem der Ansprüche 1 bis 5,
**dadurch gekennzeichnet,**
**dass** der Schablonenrohling einen verstärkten Bohrbereich (11) aufweist, in dessen Bohrung (7) eine Bohrhülse (9) eingesetzt ist.

## Claims

1. Use of a template blank for a treatment template in order to define a common reference system in two sets of image data which represent the jaw (5, 17) of a patient, wherein the template blank (1, 13) is fastened in a removable manner by means of a rapid-curing impression material (5, 19) to at least one tooth of the patient in a specific position, and a first image data set is recorded by means of a radioscopic imaging process, wherein markers (4) positioned on the template blank (1, 13) set up a reference system and are displayed by means of the imaging process,
wherein the template blank (2) is provided with a first type of markers (16) which can be displayed by means of the radioscopic imaging process and which sets up a reference system, and a second type of markers (16) which are formed by specific visible structures and which also set up a reference system,
**characterized in**
**that** a second set of image data from the surface of a model of the jaw is recorded with an optical imaging process, in particular by means of a laser scanner, wherein the template blank provided with cured impression material is positioned on the model and wherein both sets of image data are superimposed by means of the positions of the respective markers (4, 16) which can be specified therein.

2. Use according claim 1,
**characterized in**
**that** the template blank is provided with a seat which is suitable for coating with impression material (19) onto which a stable base plate (14) which forms the template blank (13) and which is produced from plastic in particular is moulded, the thickness of the base plate allowing the aperture which acts as a guide to be formed.

3. Use according to claim 2,
**characterized in**
**that** at least three markers (16) protrude out from the base plates (14) as the specific structures.

4. Use according to any one of claims 1 to 3,
**characterized in**
**that** the template blank is provided with means allowing for specific fixing in an additional device.

5. Use according to claim 2 or 3,
**characterized in**
**that** the base plate (14) is provided with an increased thickness aperture region (11) which allows a deep aperture (7), and therefore correct guiding, to be provided.

6. Use according to any one of claims 1 to 5,
**characterized in**
**that** the template blank is provided with a reinforced aperture region (11) with a drill sleeve (9) inserted into the aperture (7) thereof.

## Revendications

1. Utilisation d'une ébauche de gabarit pour un gabarit de traitement destiné à définir un système de référence commun en deux lots de données images qui représentent la mâchoire (5, 17) d'un patient, lors de laquelle, à l'aide d'une masse à empreinte (5, 19) à durcissement rapide, on fixe l'ébauche de gabarit (1, 13) sur au moins une dent du patient de manière amovible dans une position définie et à l'aide d'un procédé d'imagerie radioscopique, on enregistre d'abord un premier lot de données images, des marqueurs (4) se trouvant sur l'ébauche de gabarit (1, 13) définissant un système de référence et étant représentés à l'aide du procédé d'imagerie,
l'ébauche de gabarit (2) comportant un premier type de marqueurs (16) qui se laissent représenter à l'aide du procédé d'imagerie radioscopique et qui définissent un système de référence et un deuxième type de marqueurs (16) qui sont formés par des structures visibles définies et qui définissent également un système de référence,
**caractérisée en ce**
**qu'**avec un procédé d'imagerie optique, notamment à l'aide d'un scanner au laser, on enregistre un deuxième lot de données images de la surface d'un modèle de la mâchoire, l'ébauche de gabarit munie d'une masse d'empreinte durcie étant posée sur le modèle et on superpose les deux lots de données images à l'aide des positions des marqueurs (4, 16) qui peuvent être respectivement représentés dans ces derniers.

2. Utilisation selon la revendication 1,
**caractérisée en ce**
**que** l'ébauche de gabarit comporte un logement apte à être chargé en masse à empreinte (19), sur lequel est moulée une plaquette de base (14) stable, notamment en matière plastique, formant l'ébauche de gabarit (13) dont l'épaisseur permet de ménager le perçage servant de guidage.

3. Utilisation selon la revendication 2,
**caractérisée en ce**
**qu'**au moins trois marqueurs (16) s'élèvent en tant que structures définies à partir de la plaquette de base (14).

4. Utilisation selon l'une quelconque des revendications 1 à 3,
**caractérisée en ce**
**que** l'ébauche de gabarit comporte des moyens qui permettent un bridage défini dans un dispositif de post-traitement.

5. Utilisation selon l'une quelconque des revendications 2 ou 3,
**caractérisée en ce**
**que** la plaquette de base (14) comporte une zone de perçage (11) de plus forte épaisseur qui permet un perçage (7) profond et ainsi un bon guidage.

6. Utilisation selon l'une quelconque des revendications 1 à 5,
**caractérisée en ce**
**que** l'ébauche de gabarit comporte une zone de perçage (11) renforcée dans le perçage (7) de laquelle est insérée une douille de perçage (9).
